# EUROPEAN PATENT APPLICATION

(11) **EP 4 729 325 A1**
(43) Date of publication of application: **22.04.2026**
(21) Application number: 25208835.6
(22) Date of filing: 15.10.2025
(51) Int. Cl.: B60K 6/52, B60K 1/02, B60W 30/02, B60W 40/11, B60W 10/08

(54) **CONTROL APPARATUS FOR VEHICLE**

(30) Priority: 17.10.2024 JP 2024182298
(71) Applicant: TOYOTA JIDOSHA KABUSHIKI KAISHA, Toyota-shi, Aichi-ken 471-8571 (JP); Subaru Corporation, Tokyo 150-0013 (JP)
(72) Inventor: KIMURA, Motonori, Toyota-shi, Aichi-ken, 471-8571 (JP); SATOH, Shinji, Toyota-shi, Aichi-ken, 471-8571 (JP); TSUCHIYA, Yuki, Toyota-shi, Aichi-ken, 471-8571 (JP); NANAO, Masashi, Toyota-shi, Aichi-ken, 471-8571 (JP); KONISHI, Shinya, Toyota-shi, Aichi-ken, 471-8571 (JP); HAYASHI, Noritaka, Shibuya-ku, Tokyo, 150-0013 (JP); SAKAMOTO, Masaya, Shibuya-ku, Tokyo (JP)
(74) Representative: TBK

(57) **Abstract**

A control apparatus (50;130) for a vehicle (10;100) that includes (i) right and left front wheels (12;114,112), (ii) a front-wheel drive apparatus (20;124,122) which is configured to drive the front wheels (12;114,112), (iii) right and left rear wheels (14;118,116) and (iv) a rear-wheel drive apparatus (30;128,126) which is provided independently of the front-wheel drive apparatus (20;124,122) and which is configured to drive the rear wheels (14;118,116). The control apparatus (50;130) includes (a) a pitch-angular-speed calculator (54) configured to calculate an angular speed of a vehicle body that is a body of the vehicle (10;100), in a pitch direction of the vehicle body; and (b) a drive controller (52) configured to change a driving force of the front wheels (12;114,112) and a driving force of the rear wheels (14;118,116), based on the angular speed of the vehicle body in the pitch direction, for suppressing a posture change of the vehicle body in the pitch direction while keeping a total driving force of the vehicle (10; 100) unchanged..

## Description

### FIELD OF THE INVENTION

The present invention relates to a control apparatus for a vehicle, wherein the control apparatus is configured to suppress a pitching behavior of a body of the vehicle.

### BACKGROUND OF THE INVENTION

There is well known a control apparatus for a vehicle that includes (i) right and left front wheels, (ii) a front-wheel drive apparatus which is configured to drive the front wheels, (iii) right and left rear wheels and (iv) a rear-wheel drive apparatus which is provided independently of the front-wheel drive apparatus and which is configured to drive the rear wheels. For example, WO 2015/019399 A1 discloses a vehicle vibration damping control apparatus in which, in a two-wheel drive mode, a vibration damping control is performed to reduce sprung vibrations by adding a control torque for reducing the sprung vibrations, to a total driving torque of the vehicle.

### SUMMARY OF THE INVENTION

By the way, in the vibration damping control disclosed in WO 2015/019399 A1, the total driving torque of the vehicle is changed when the sprung vibrations are to be reduced. Thus, by execution of the vibration damping control, the vehicle is accelerated or decelerated, or a posture change of the vehicle is caused as a result of the acceleration or deceleration of the vehicle, which may cause discomfort to a driver of the vehicle.

The present invention was made in view of the background art described above. It is therefore an object of the present invention to provide a control apparatus for a vehicle in which front and rear wheels are driven independently of each other, wherein the control apparatus is capable of suppressing the pitching behavior of the vehicle body while minimizing discomfort to the vehicle driver.

The object indicated above is achieved according to the following aspects of the present invention.

According to a first aspect of the invention, there is provided a control apparatus for a vehicle that includes (i) right and left front wheels, (ii) a front-wheel drive apparatus which is configured to drive the front wheels, (iii) right and left rear wheels and (iv) a rear-wheel drive apparatus which is provided independently of the front-wheel drive apparatus and which is configured to drive the rear wheels. The control apparatus includes (a) a pitch-angular-speed calculator configured to calculate an angular speed of a vehicle body that is a body of the vehicle, in a pitch direction of the vehicle body; and (b) a drive controller configured to change a driving force of the front wheels and a driving force of the rear wheels, based on the angular speed of the vehicle body in the pitch direction, for suppressing a posture change of the vehicle body in the pitch direction while keeping a total driving force of the vehicle unchanged.

According to a second aspect of the invention, in the control apparatus according to the first aspect of the invention, when the posture change of the vehicle body is caused from a forward tilting posture to a backward tilting posture by the angular speed of the vehicle body in the pitch direction, the drive controller is configured to increase the driving force of the rear wheels and to reduce the driving force of the front wheels by an amount corresponding to an amount of increase of the driving force of the rear wheels. On the other hand, when the posture change of the vehicle body is caused from the backward tilting posture to the forward tilting posture by the angular speed of the vehicle body in the pitch direction, the drive controller is configured to reduce the driving force of the rear wheels and to increase the driving force of the front wheels by an amount corresponding to an amount of reduction of the driving force of the rear wheels.

According to a third aspect of the invention, in the control apparatus according to the second aspect of the invention, the drive controller is configured to increase the amount of the increase or reduction of the driving force of the rear wheels as an absolute value of the angular speed of the vehicle body in the pitch direction is increased.

According to a fourth aspect of the invention, in the control apparatus according to any one of the first through third aspects of the invention, (ii) the front-wheel drive apparatus includes (ii-1) a front-wheel driving force source and (ii-2) a front-wheel differential gear mechanism configured to distribute the drive force supplied from the front-wheel driving force source between the right and left front wheels and to allow a difference between rotations of the right and left front wheels, and (iv) the rear-wheel drive apparatus includes (iv-1) a rear-wheel driving force source and (iv-2) a rear-wheel differential gear mechanism configured to distribute the drive force supplied from the rear-wheel driving force source between the right and left rear wheels and to allow a difference between rotations of the right and left rear wheels.

According to a fifth aspect of the invention, in the control apparatus according to any one of the first through third aspects of the invention, the front-wheel drive apparatus includes a front-wheel electric motor which is connected to a front wheel body of each of the right and left front wheels in a force transmittable manner and which includes a part disposed in a space on an inner peripheral side of the front wheel body, and the rear-wheel drive apparatus includes a rear-wheel electric motor which is connected to a rear wheel body of each of the right and left rear wheels in a force transmittable manner and which includes a part disposed in a space on an inner peripheral side of the rear wheel body.

In the control apparatus according to the first aspect of the invention, the driving force of the front wheels and the driving force of the rear wheels are changed based on the angular speed of the vehicle body in the pitch direction, such that the posture change of the vehicle body in the pitch direction is suppressed without changing the total driving force of the vehicle including the front-wheel drive apparatus and the rear-wheel drive apparatus that are provided independently of each other. Thus, it is possible to suppresses movement of the vehicle body in the pitch direction, owing to changes of the driving forces of the wheels and suspension characteristics. In addition, when the movement of the vehicle body in the pitch direction is suppressed, the total driving force of the vehicle is less likely to be changes. As a result, in the vehicle with the independently driven front and rear wheels, it is possible to suppress the pitching behavior of the vehicle body while minimizing discomfort to a driver of the vehicle.

In the control apparatus according to the second aspect of the invention, when the posture change of the vehicle body is caused from the forward tilting posture to the backward tilting posture by the angular speed of the vehicle body in the pitch direction, the driving force of the rear wheels is increased while the driving force of the front wheels is reduced by the amount corresponding to the amount of increase of the driving force of the rear wheels, so that movement of the vehicle body in the pitch direction is suppressed by an anti-squat effect of the rear suspension that suppresses the vehicle body from tilting backward owing to the increase of the driving force of the rear wheels. In this instance, the total driving force of the vehicle is less likely to be changed. On the other hand, when the posture change of the vehicle body is caused from the backward tilting posture to the forward tilting posture by the angular speed of the vehicle body in the pitch direction, the driving force of the rear wheels is reduced while the driving force of the front wheels is increased by the amount corresponding to the amount of reduction of the driving force of the rear wheels, so that movement of the vehicle body in the pitch direction is suppressed by an anti-dive effect of the rear suspension that suppresses the vehicle body from tilting forward, namely, by an anti-lift effect of the rear suspension that suppresses the rear wheel from being lifted, owing to the reduction of the driving force of the rear wheels, i.e., generation of a braking force of the rear wheels. In this instance, the total driving force of the vehicle is less likely to be changed.

In the control apparatus according to the third aspect of the invention, the amount of the increase or reduction of the driving force of the rear wheels is increased as the absolute value of the angular speed of the vehicle body in the pitch direction is increased. Thus, it is possible to suppress the movement of the vehicle body in the pitch direction, owing to the effect on the rear suspension caused by the change of the driving force of the rear wheels.

In the control apparatus according to the fourth aspect of the invention, the front-wheel drive apparatus includes the front-wheel driving force source and the front-wheel differential gear mechanism, while the rear-wheel drive apparatus includes the rear-wheel driving force source and the rear-wheel differential gear mechanism. When the driving force of the rear wheels is momentarily increased, for example, a bias effect of the rear-wheel differential gear mechanism is increased whereby a roll motion of the vehicle body is reduced. When the driving force of the front wheels is momentarily increased, a bias effect of the front-wheel differential gear mechanism is increased whereby the roll motion of the vehicle body is reduced. The bias effect of the differential gear mechanism is that a differential effect of the differential gear mechanism is limited until an input torque to the differential gear mechanism exceeds a differential limiting torque that is generated when a side gear is pressed against a differential casing by the driving force. With the differential effect of the differential gear mechanism being limited, the right and left wheels are suppressed from being moved in opposite directions in relation to expansion and contraction of a wheelbase of the vehicle. Consequently, it is possible to suppress the right and left suspensions from expanding and contracting in opposite directions and to reduce the roll motion of the vehicle body.

In the control apparatus according to the fifth aspect of the invention, the front-wheel drive apparatus includes the front-wheel electric motor which is connected to a front wheel body of each of the right and left front wheels in the force transmittable manner and which includes the part disposed in the space on the inner peripheral side of the front wheel body. The rear-wheel drive apparatus includes the rear-wheel electric motor which is connected to the rear wheel body of each of the right and left rear wheels in the force transmittable manner and which includes the part disposed in the space on the inner peripheral side of the rear wheel body. By adopting an in-wheel motor system, the suspension characteristics have a greater ability to control the increase and reduction of the driving force, so that the movement of the vehicle body in the pitch direction is further suppressed, as compared to an arrangement in which the force is transmitted from the force source to the drive wheels through the differential gear mechanism.

### BRIEF DESCRIPTION OF THE DRAWINGS

FIG. 1 is a view schematically showing a construction of a vehicle to which the present invention is applied, for explaining main parts of control functions for various controls in the vehicle;
FIG. 2 is a view for explaining an example of an internal-torque simulation control;
FIG. 3 is a block diagram for explaining main parts of control operations of an electronic control apparatus of the vehicle, specifically, the control operation for suppressing a pitching behavior of a body of the vehicle while minimizing discomfort to a driver of the vehicle in which front and rear wheels are driven independently of each other,
FIG. 4 is a time chart in a case in which the control operations shown in the block diagram of FIG. 3 are executed;
FIG. 5 is a view showing, by way of example, an effect in the case in which the control operations shown in the block diagram of FIG. 3 are executed;
FIG. 6 is a view schematically showing a construction of a vehicle to which the present invention is applied, wherein the vehicle is other than the vehicle shown in FIG. 1;
FIGS. 7A and 7B are views for comparing an anti-squat effect in an embodiment shown in FIG. 1 and that in an embodiment shown in FIG. 6, wherein FIG. 7A is the view showing the anti-squat effect in the embodiment shown in FIG. 1, and FIG. 7B is the view showing the anti-squat effect in the embodiment shown in FIG. 6;
FIGS. 8A-8C are views showing examples of an internal circulation torque by a pitching behavior in an AWD vehicle with a propeller shaft, wherein FIG. 8A is the view showing, by way of example, a relationship between a vehicle posture and a pitch angle, FIG. 8B is the view showing, by way of example, the internal circulation torque when a rear suspension is changed from a rebound state to a bound state, and FIG. 8C is the view showing, by way of example, the internal circulation torque when the rear suspension is changed from the bound state to the rebound state; and
FIGS. 9A and 9B are views schematically showing a relationship between a driving force and a sprung posture, wherein FIG. 9A is the view showing a case in which a rear driving force is applied to an acceleration side, and FIG. 9B is the view showing a case in which the rear driving force is applied to a deceleration side.

### DETAILED DESCRIPTION OF PREFERRED EMBODIMENTS

Hereinafter, embodiments of the invention will be described in detail with reference to the accompanying drawings.

### FIRST EMBODIMENT

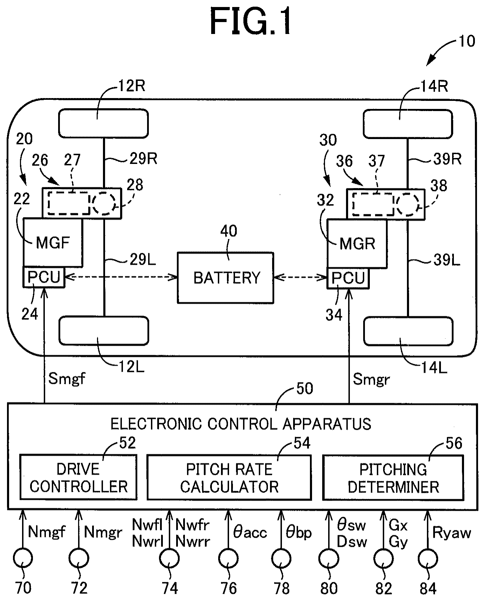

FIG. 1 is a view schematically showing a construction of a vehicle 10 to which the present invention is applied, for explaining main parts of control functions for various controls in the vehicle 10. As shown in FIG. 1, the vehicle 10 includes right and left front wheels 12, right and left rear wheels 14, a front drive apparatus 20 and a rear drive apparatus 30. The front wheels 12 consist of a right front wheel 12R and a left front wheel 12L. The rear wheels 14 consist of a right rear wheel 14R and a left rear wheel 14L. The front drive apparatus 20 corresponds to "front-wheel drive apparatus" recited in appended claims. The rear drive apparatus 30 corresponds to "rear-wheel drive apparatus" recited in the appended claims. The rear drive apparatus 30 is provided independently of the front drive apparatus 20. The vehicle 10 further includes a battery 40 that is a chargeable and dischargeable DC power source. It is noted that the term "right and left" refers to right and left relative to a forward direction of vehicle 10.

The vehicle 10 is an all-wheel drive vehicle capable of adjusting distribution of a driving torque between the front wheels 12 and the rear wheels 14. The vehicle 10 has two front wheels 12 and two rear wheels 14. Thus, the vehicle 10 is a four-wheel drive vehicle having four drive wheels. In the present embodiment, all-wheel drive (AWD) and four-wheel drive (4WD) are synonymous with each other. The vehicle 10 is capable of running with AWD control (also known as AWD state) in which the front wheels 12 and rear wheels 14 are driven, and also with two-wheel drive (2WD) control (also known as 2WD state) in which only the front wheels 12 or rear wheels 14 are driven. For example, the vehicle 10 is capable of running with front-wheel drive (FWD) control (also known as FWD state) in which only the front wheels 12 are driven, and/or with rear-wheel drive (RWD) control (also known as RWD state) in which only the rear wheels 14 are driven.

The front drive apparatus 20 includes a front motor 22 (see "MGF" in FIG. 1), a front PCU (power control unit) 24 and a front force transmission device 26. The rear drive apparatus 30 includes a rear motor 32 (see "MGR" in FIG. 1), a rear PCU 34 and a rear force transmission device 36.

Each of the front motor 22 and the rear motor 32 is a known rotary electric machine (motor generator) serving as a force source of the vehicle 10. The front motor 22 corresponds to "front-wheel driving force source" recited in the appended claims. The rear motor 32 corresponds to "rear-wheel driving force source" recited in the appended claims. The front motor 22 is connected to the battery 40 through the front PCU 24. The front PCU 24 is an electric-power control device that includes, for example, an inverter, and controls an electric power exchanged between the battery 40 and the front motor 22. The front PCU 24 controls the front motor 22. The rear motor 32 is connected to the battery 40 through the rear PCU 34.
The rear PCU 34 is an electric-power control device that includes, for example, an inverter, and controls the electric power exchanged between the battery 40 and the rear motor 32. The rear PCU 34 controls the rear motor 32.

The front force transmission device 26 is a front-wheel force transmission device that transmits power from the front motor 22 to the front wheels 12. The front force transmission device 26 includes a front gear mechanism 27 connected to the front motor 22, a front differential gear device 28 connected to the front gear mechanism 27, and front drive shafts 29 connected to the front differential gear device 28. The front drive shafts 29 include a left front drive shaft 29L that connects between the front differential gear device 28 and the left front wheel 12L, and a right front drive shaft 29R that connects between the front differential gear device 28 and the right front wheel 12R. The front differential gear device 28 corresponds to "front-wheel differential gear mechanism" recited in the appended claims. The front differential gear device 28 distributes the force supplied from the front motor 22 to the right and left front wheels 12R, 12L, and allow a difference between rotations of the right and left front wheels 12R, 12L.

The rear force transmission device 36 is a rear-wheel force transmission device that transmits power from the rear motor 32 to the rear wheels 14. The rear force transmission device 36 includes a rear gear mechanism 37 connected to the rear motor 32, a rear differential gear device 38 connected to the rear gear mechanism 37, and rear drive shafts 39 connected to the rear differential gear device 38. The rear drive shafts 39 include a left rear drive shaft 39L that connects between the rear differential gear device 38 and the left rear wheel 14L, and a right rear drive shaft 39R that connects between the rear differential gear device 38 and the right rear wheel 14R. The rear differential gear device 38 corresponds to "rear-wheel differential gear mechanism" recited in the appended claims. The rear differential gear device 38 distributes the force supplied from the rear motor 32 to the right and left rear wheels 14R, 14L, and allow a difference between rotations of the right and left rear wheels 14R, 14L.

The vehicle 10 further includes an electronic control apparatus 50 as a control apparatus that is configured to perform various control operations. The electronic control apparatus 50 includes a so-called microcomputer incorporating a CPU, a ROM, a RAM and an input-output interface. The CPU performs the various control operations of the vehicle 10, by processing various input signals, according to control programs stored in the ROM, while utilizing a temporary data storage function of the RAM. The electronic control apparatus 50 corresponds to "control apparatus" recited in the appended claims.

The electronic control apparatus 50 is configured to receive various signals based on detection values detected by various sensors provided in the vehicle 10. The various sensors include an MGF rotation sensor 70, an MGR rotation sensor 72, wheel speed sensors 74, an accelerator-opening degree sensor 76, a brake sensor 78, a steering sensor 80, a G sensor 82 and a yaw rate sensor 84. The various signals include, for example, an MGF rotational speed Nmgf, an MGR rotational speed Nmgr, a left-front-wheel rotational speed Nwfl, a right-front-wheel rotational speed Nwfr, a left-rear-wheel rotational speed Nwrl and a right-rear-wheel rotational speed Nwrr. The various signals further include an accelerator opening degree θacc, a brake operation amount θbp, a steering angle θsw, a steering direction Dsw, a longitudinal acceleration Gx, a lateral acceleration Gy and yaw rate Ryaw. The electronic control apparatus 50 obtains a vehicle running speed V based on, for example, the left-front-wheel rotational speed Nwfl, the right-front-wheel rotational speed Nwfr, the left-rear-wheel rotational speed Nwrl and the right-rear-wheel rotational speed Nwrr.

The MGF rotational speed Nmgf is a rotational speed of the front motor 22. The MGR rotational speed Nmgr is the rotational speed of the rear motor 32. The accelerator opening degree θacc is a signal that indicates an amount of an accelerating operation made by a vehicle driver (a driver of the vehicle 10) or an amount of an accelerator operation made by the vehicle driver. The brake operation amount θbp is a signal that indicates a state of a brake pedal being operated by the vehicle driver to activate wheel brakes, and also indicates an amount of a depressing operation made on the brake pedal by the vehicle driver. The steering angle θsw is a steering angle of a steering wheel. The steering direction Dsw is a steering direction of the steering wheel. The longitudinal acceleration Gx is an acceleration of the vehicle 10 in a longitudinal direction of vehicle 10. The lateral acceleration Gy is an acceleration of the vehicle 10 in a lateral direction of the vehicle 10. The yaw rate Ryaw is a rotary angular speed of the vehicle 10 around a vertical axis of the vehicle 10.

The electronic control apparatus 50 outputs various command signals to various devices provided in the vehicle 10. The various devices include, for example, the front PCU 24 and the rear PCU 34. The various command signals include, for example, an MGF control command signal Smgf and an MGR control command signal Smgr. The MGF control command signal Smgf is a torque command value for controlling the MGF torque Tmgf, which is a torque of the front motor 22. The MGR control command signal Smgr is a torque command value for controlling the MGR torque Tmgr, which is a torque of the rear motor 32.

The electronic control apparatus 50 includes a drive controller 52 for performing various controls in the vehicle 10.

The drive controller 52 controls the front drive apparatus 20 and the rear drive apparatus 30. The drive controller 52 calculates a drive request amount requested to the vehicle 10 by the vehicle driver, by applying the accelerator opening degree θacc and the vehicle running speed V to a drive request amount map. The drive request amount map is a relationship for obtaining the drive request amount, which is obtained and stored in advance, for example, experimentally or by design, that is, which is determined in advance. The drive request amount may be a requested driving torque Tddem or a requested driving force Fddem, which are requested values of the driving torque Td and driving force Fd that are to be applied to the wheels (front wheels 12, rear wheels 14). The drive controller 52 controls the front motor 22 and the rear motor 32 so as to establish the requested driving torque Tddem. It is noted that the torque and the driving force are synonymous with each other unless otherwise specified.

The driving torque Td is a sum of a front torque Tdf and a rear torque Tdr, wherein the front torque Tdf is the driving torque of each of the front wheels 12 while the rear torque Tdr is the driving torque of each of the rear wheels 14. The requested driving torque Tddem is a sum of a requested front torque Tdfdem and a requested rear torque Tdrdem, wherein the requested front torque Tdfdem is the requested value of the front torque Tdf while the requested rear torque Tdrdem is the requested value of the rear torque Tdr. The requested driving force Fddem is a sum of a requested front driving force Fdfdem and a requested rear driving force Fdrdem, wherein the requested front driving force Fdfdem is the requested value of the front driving force Fdf while the requested rear driving force Fdrdem is the requested value of the rear driving force Fdr.

The drive controller 52 determines a torque distribution ratio γfr between the front and rear wheels, by applying a plurality of driving-force-related values, such as the accelerator opening degree θacc, the vehicle running speed V, the longitudinal acceleration Gx and the yaw rate Ryaw, to a torque distribution-ratio map. The torque distribution-ratio map is a predetermined relationship for determining the torque distribution ratio γfr based on driving conditions of the vehicle 10. The drive controller 52 calculates the requested front torque Tdfdem and the requested rear torque Tdrdem based on the requested driving torque Tddem and the torque distribution ratio γfr. The drive controller 52 outputs the MGF control command signal Smgf to the front PCU 24 so as to control the front motor 22 to establish the requested front torque Tdfdem. The drive controller 52 outputs the MGR control command signal Smgr to the rear PCU 34 so as to control the rear motor 32 to establish the requested rear torque Tdrdem.

By the way, when vehicle 10 runs on an undulating, uneven road surface, a pitching behavior in which a vehicle body (body of the vehicle 10) repeatedly oscillates between a nose-up direction (tilts backward) and a nose-dive direction (tilts forward) could occur. If such a pitching behavior is increased, it may cause discomfort or anxiety to occupants of the vehicle 10.

In the AWD vehicle in which the front and rear drive apparatuses are connected via a propeller shaft, an internal circulation torque is generated as a result of the pitching behavior, and it has been found out that the internal circulation torque acts to suppress the pitching behavior. The internal circulation torque is the torque that is moved between the front and rear drive apparatuses, and is offset by changes of the front torque and the rear torque. The internal circulation torque does not change the driving torque, and is not a torque used for driving the vehicle.

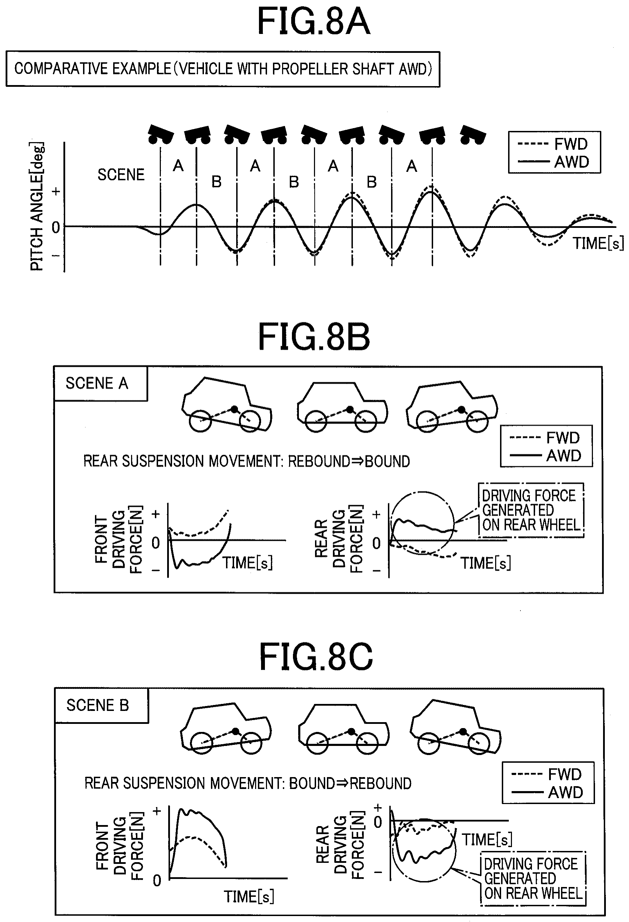

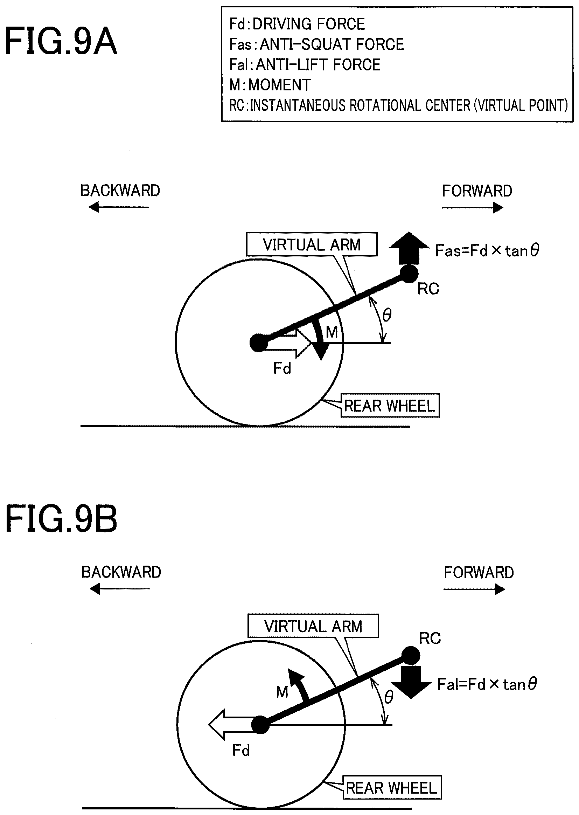

FIGS. 8A-8C are views showing examples of the internal circulation torque generated by the pitching behavior in the AWD vehicle with the propeller shaft, wherein FIG. 8A is the view showing, by way of example, a relationship between a vehicle posture and a pitch angle θp, FIG. 8B is the view showing, by way of example, the internal circulation torque when a rear suspension is changed from a rebound state to a bound state, and FIG. 8C is the view showing, by way of example, the internal circulation torque when the rear suspension is changed from the bound state to the rebound state. FIGS. 9A and 9B are views schematically showing a relationship between a driving force and a sprung posture, wherein FIG. 9A is the view showing a case in which the rear driving force Fdr is applied to an acceleration side, and FIG. 9B is the view showing a case in which the rear driving force Fdr is applied to a deceleration side. The driving force Fd applied to the deceleration side may be regarded as a braking force.

In FIG. 8A, the pitch angle θp [deg] is an angle of the vehicle body in a pitch direction of the vehicle body. In the present embodiment, a nose-up direction is considered positive in the pitch angle θp. A scene in which the vehicle posture is changed from a nose-dive state to a nose-up state, is referred to as a scene A. A scene in which the vehicle posture is changed from the nose-up state to the nose-dive state, is referred to as a scene B. The nose-dive state is the rebound state in which the rear suspension extends. The nose-up state is the bound state in which the rear suspension contracts. As shown in FIG. 8B, in the scene A, a positive rear driving force is generated as the internal circulation torque, and a negative front driving force is generated by a magnitude corresponding to the positive rear driving force. In other words, the driving force is generated on the rear wheels. As shown in FIG. 8C, in the scene B, a negative rear driving force is generated as the internal circulation torque, and a positive front driving force is generated by a magnitude corresponding to the negative rear driving force. In other words, the braking force is generated on the rear wheels.

As shown in FIG. 9A, when the driving force Fd acts on the rear wheels, the rear suspension is rotated around an instantaneous rotational center RC, thereby generating an anti-squat force Fas that moves the vehicle body. The anti-squat force Fas is a force lifting the vehicle body and reducing a rearward tilt of the vehicle body, which is caused by weight transfer during acceleration of the vehicle. As shown in FIG. 9B, when the braking force Fd acts on the rear wheels, the rear suspension is rotated around the instantaneous rotational center RC, thereby generating an anti-dive force that moves the vehicle body. The anti-dive force is a force holding the vehicle body down and reducing a phenomenon of a nose dive in which the vehicle body tilts forward due to the braking force acting on the rear wheels or weight transfer to the front wheels, owing to suspension characteristics. Especially, the force suppressing a rear wheel lift is referred to as an anti-lift force Fal.

When the driving force is applied to the rear wheels, as in the scene A shown in FIG. 8B, an anti-squat effect of the rear suspension (see FIG. 9A) suppresses movement of the vehicle body in the pitch direction, which would cause the nose-up state. When the braking force is applied to the rear wheels, as in the scene B shown in FIG. 8C, an anti-lift effect of the rear suspension (see FIG. 9B) suppresses movement of the vehicle body in the pitch direction, which would cause the nose-dive state. When considering a damping effect of the pitching behavior and the internal circulation torque, the rear suspension, which has a higher anti-squat coefficient (also known as anti-squat ratio) than the front suspension, should be focused.

In the AWD vehicle with the propeller shaft, for example, as shown in FIG. 8A, the internal circulation torque generated by the pitching behavior damps the pitch angle θp, thereby making the pitching behavior more easily suppressed than in the FWD vehicle. As such, a sprung mass behavior is considered to be relatively good in the AWD vehicle with the propeller shaft.

In the present embodiment, the vehicle 10 is the AWD vehicle, but, without the propeller shaft. In the vehicle 10, for example, in the FWD state, it might be possible to add a control torque to the drive torque Td so as to suppress sprung vibrations, for thereby lifting a front portion of the vehicle body during acceleration of the vehicle 10 and damping the pitching behavior. However, since the driving torque Td is varied when the sprung vibrations are to be suppressed, the vehicle 10 is accelerated and/or decelerated, or a posture change of the vehicle body is caused as a result of the acceleration and/or deceleration of the vehicle 10, which could cause discomfort to the vehicle driver.

Therefore, the electronic control apparatus 50 executes an internal-torque simulation control (CNsim) in the vehicle 10, which simulates the internal circulation torque in the AWD vehicle with the propeller shaft. That is, the vehicle 10 realizes a behavior of the AWD vehicle having the propeller shaft, by executing the internal-torque simulation control. The magnitude of the internal circulation torque generated by the propeller shaft is reduced, particularly, by influence of a rigidity of the drive shaft. Since the vehicle 10 does not have the propeller shaft, it is possible to obtain greater benefits than the AWD vehicle with the propeller shaft. As a result, the vehicle 10 can achieve performance improvements equivalent to or greater than those of the AWD vehicle with the propeller shaft.

The electronic control apparatus 50 further includes a pitch rate calculator 54 and a pitching determiner 56, for simulating the internal circulation torque in the AWD vehicle with the propeller shaft.

The pitch rate calculator 54 calculates the pitch rate dθp, which is a derivative value of the pitch angle θp, i.e., an angular speed of the vehicle body in the pitch direction. The pitch rate calculator 54 corresponds to "pitch-angular-speed calculator" recited in the appended claims. The pitch rate calculator 54 calculates the pitch rate dθp, based on, for example, a difference between a front-wheel rotational speed Nwf and a rear-wheel rotational speed Nwr. The front-wheel rotational speed Nwf is, for example, an average of the left-front-wheel rotational speed Nwfl and the right-front-wheel rotational speed Nwfr. The rear-wheel rotational speed Nwr is, for example, an average of the left-rear-wheel rotational speed Nwrl and the right-rear-wheel rotational speed Nwrr.

The pitching determiner 56 determines whether the pitching behavior is actually occurring in the vehicle 10. In a case in which the wheels are slipping, the pitching behavior does not necessarily occur even if the pitch rate dθp is not lower than a reference value. The pitching determiner 56 determines whether the pitching behavior is actually occurring in the vehicle 10, based on, for example, a rate of change of the vehicle running speed V and the longitudinal acceleration Gx.

The drive controller 52 executes the internal-torque simulation control CNsim, based on the pitch rate dθp calculated by the pitch rate calculator 54. For example, the drive controller 52 calculates an amount of change of the rear torque Tdr that suppresses the posture change of the vehicle body in the pitch direction, based on the pitch rate dθp. The drive controller 52 calculates an amount of change of the front torque Tdf, by inverting a sign of the amount of change of the rear torque Tdr. The drive controller 52 calculates a latest value of the requested rear torque Tdrdem by adding the amount of change of the rear torque Tdr to the requested rear torque Tdrdem. The drive controller 52 calculates a latest value of the requested front torque Tdfdem by adding the amount of change of the front torque Tdf to the requested front torque Tdfdem. However, if the pitching determiner 56 determines that the pitching behavior is not actually occurring, the drive controller 52 sets each of the amount of change of the rear torque Tdr and the amount of change of the front torque Tdf, to zero. In this way, the drive controller 52 changes the front driving force Fdf and the rear driving force Fdr for suppressing the posture changes of the vehicle body in the pitch direction, based on the pitch rate dθp, while keeping the total driving force Fd of the vehicle 10 unchanged. For example, the drive controller 52 changes the front driving force Fdf and the rear driving force Fd, based on the pitch rate dθp, by using predetermined change amounts to suppress the posture change of the vehicle body in the pitch direction.

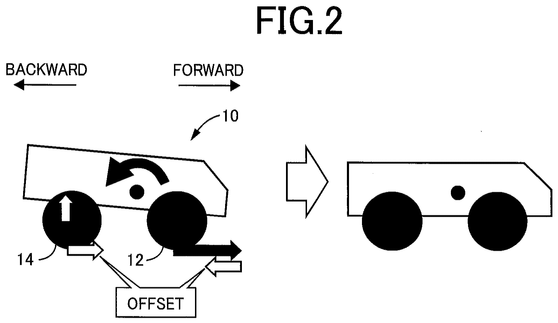

FIG. 2 is a view for explaining an example of the internal-torque simulation control Cnsim. As shown in FIG. 2, in a case in which the pitching behavior occurs while the vehicle 10 is running in the FWD state, when the pitch rate dθp indicates that the vehicle body tilts backward, the rear driving force Fdr is applied to the rear wheels 14 for thereby suppressing the posture change of the vehicle body, owing to the anti-squat effect of the rear suspension. In this instance, the front driving force Fdf is reduced by an amount corresponding to an amount of the rear driving force Fdr applied to the rear wheels 14. Although not shown in FIG. 2, when the pitch rate dθp indicates that the vehicle body tilts forward, the braking force is applied to the rear wheels 14 for thereby suppressing the posture change of the vehicle body, owing to the anti-lift effect of the rear suspension. When the internal-torque simulation control CNsim is executed, the total driving force Fd of vehicle 10 is controlled to be constant, for thereby suppressing unintended acceleration and deceleration and making it less likely that the driver would feel uncomfortable.

When the pitch rate dθp causes the posture change of the vehicle body from the forward tilting posture to the backward tilting posture, the drive controller 52 increases the rear driving force Fdr and reduces the front driving force Fdf by an amount corresponding to an amount of increase of the rear driving force Fdr. When the pitch rate dθp causes the posture change of the vehicle body from the forward tilting posture to the backward tilting posture, the drive controller 52 increases the rear driving force Fdr by the amount that is determined based on the pitch rate dθp, for example. The increase amount determined based on the pitch rate dθp is a change amount that is determined to generate the anti-squat force that suppresses the posture change of the vehicle body in the pitch direction, for example.

When the pitch rate dθp causes the posture change of the vehicle body from the backward tilting posture to the forward tilting posture, the drive controller 52 reduces the rear driving force Fdr and increases the front driving force Fdf by an amount corresponding to an amount of reduction of the rear driving force Fdr. When the pitch rate dθp causes the posture change of the vehicle body from the backward tilting posture to the forward tilting posture, the drive controller 52 reduces the rear driving force Fdr by the amount that is determined based on the pitch rate dθp, for example. The reduction amount determined based on the pitch rate dθp is a change amount that is determined to generate the anti-lift force that suppresses the posture change of the vehicle body in the pitch direction, for example.

The increase amount determined based on the pitch rate dθp is increased as an absolute value of the pitch rate dθp is increased. The reduction amount determined based on the pitch rate dθp is increased as the absolute value of the pitch rate dθp is increased. That is, the drive controller 52 increases the amount of increase or reduction of the rear driving force Fdr as the absolute value of the pitch rate dθp is increased.

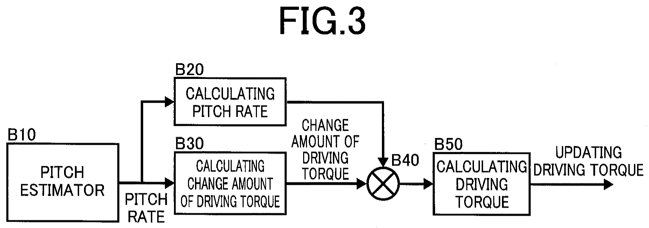

FIG. 3 is a block diagram for explaining main parts of control operations of the electronic control apparatus 50, specifically, the control operation for suppressing the pitching behavior of the vehicle body of the vehicle 10 (in which the front and rear wheels are driven independently) while minimizing discomfort to the vehicle driver. The control operation is executed, for example, in a repeated manner.

As shown in FIG. 3, the control operation is initiated with block B10 corresponding to function of the pitch rate calculator 54, which is implemented to calculate the pitch rate dθp. Next, block B20 corresponding to function of the pitching determiner 56 is implemented to determine whether the pitching behavior is actually occurring in the vehicle 10 or not. In parallel with implementation of block B20, block B30 corresponding to function of the drive controller 52 is implemented to calculate the amount of change of the rear torque Tdr based on the pitch rate dθp, wherein the amount of change of the rear torque Tdr is required to suppress the posture change of the vehicle body. Further, at block B30, the amount of change of the rear torque Tdr is calculated as the amount of change of the front torque Tdf, by reversing a sign of the amount of change of the rear torque Tdr. Next, block B40 corresponding to function of the drive controller 52 is implemented to set each of the amount of change of the rear torque Tdr and the amount of change of the front torque Tdf to zero in a case in which it has been determined at block B20 that the pitching behavior is not actually occurring in the vehicle 10. Next, block B50 corresponding to function of the drive controller 52 is implemented to calculate a latest value of the requested rear torque Tdrdem, by adding the amount of change of the rear torque Tdr to the requested rear torque Tdrdem. Further, at block B50, a latest value of the requested front torque Tdfdem is calculated by adding the amount of change of the front torque Tdf to the requested front torque Tdfdem.

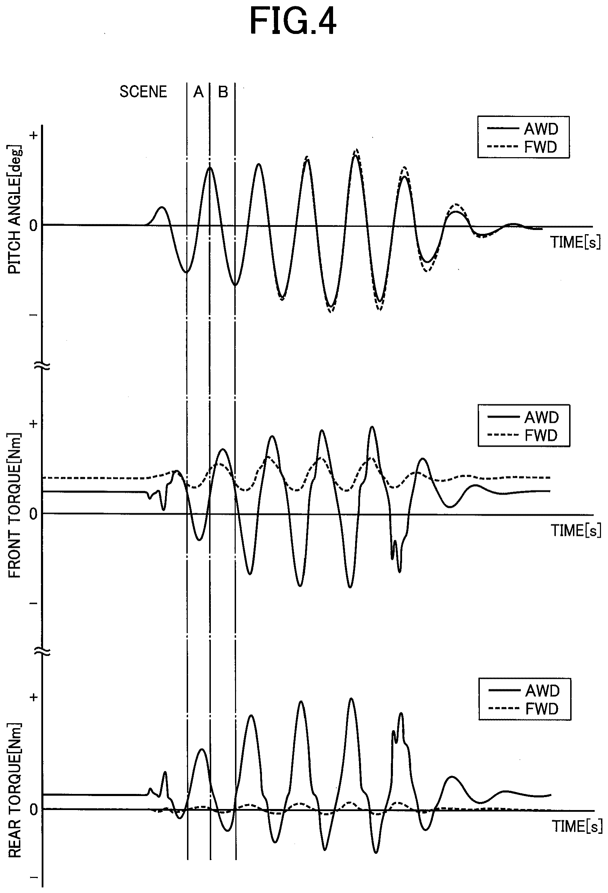

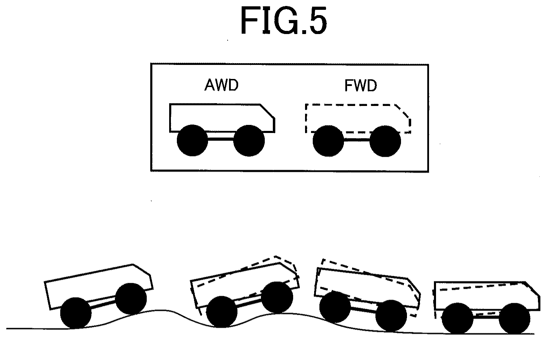

FIG. 4 is a time chart in a case in which the control operation shown in the block diagram of FIG. 3 is executed. FIG. 5 is a view showing, by way of example, an effect in the case in which the control operation shown in the block diagram of FIG. 3 is executed.

In FIGS. 4 and 5, solid lines represent the vehicle 10 that is the AWD vehicle, while dashed lines represent the FWD vehicle as a comparative example. When the vehicle 10 is running on a wavy, uneven road surface (see FIG. 5), the rear torque Tdr is increased in the scene A in which the posture of the vehicle body is changed from the nose-dive state to the nose-up state. Further, in the scene A, the front torque Tdf is reduced by an amount corresponding to an amount of increase of the rear torque Tdr. The rear torque Tdr is reduced in the scene B in which the posture of the vehicle body is changed from the nose-up state to the nose-dive state. Further, in the scene B, the front torque Tdf is increased by an amount corresponding to an amount of reduction of the rear torque Tdr. Furthermore, the amount of change of the rear torque Tdr is made relatively large, when the pitch angle θp is zero or close to zero, namely, when the absolute value of the pitch rate dθp is relatively large. The FWD vehicle represented by the dashed line has natural front and rear torques. In the AWD vehicle (vehicle 10) of the present embodiment, an effect of damping the pitch angle θp is obtained (see FIG. 4), thereby making the pitching behavior more easily suppressed than in the FWD vehicle (see FIG. 5).

When the rear driving force Fdr is momentarily increased, a bias effect of the rear differential gear device 38 is increased whereby a roll motion of the vehicle body is reduced. When the front driving force Fdf is momentarily increased, a bias effect of the front differential gear device 28 is increased whereby the roll motion of the vehicle body is reduced. For example, in the differential gear device, a differential limiting torque is generated when a side gear is pressed against a differential casing by the driving force. The differential limiting torque is a torque that limits a differential effect of the differential gear device. The bias effect of the differential gear device is that the differential effect of the differential gear device is limited until an input torque to the differential gear device exceeds the differential limiting torque. In the roll motion of the vehicle body, the right and left suspensions expand and contract in opposite directions, thereby causing the right and left wheels to move in opposite directions in relation to expansion and contraction of a wheelbase of the vehicle. Such movements of the right and left wheels are suppressed with the differential effect of the differential gear device being limited. This suppresses the suspensions from expanding and contracting, thereby suppressing the right and left suspensions from expanding and contracting in opposite directions and reducing the roll motion of the vehicle body.

As described above, in the present embodiment, the front driving force Fdf and the rear driving force Fdr are changed based on the pitch rate dθp of the vehicle body, such that the posture change of the vehicle body in the pitch direction is suppressed without changing the total driving force Fd of the vehicle 10. Thus, it is possible to suppresses movement of the vehicle body in the pitch direction, owing to changes of the driving forces Fd of the wheels and the suspension characteristics. In addition, when the movement of the vehicle body in the pitch direction is suppressed, the total driving force Fd of the vehicle 10 is less likely to be changes. As a result, in the vehicle 10 with the independently driven front and rear wheels, it is possible to suppress the pitching behavior of the vehicle body while minimizing discomfort to the driver of the vehicle 10.

In the present embodiment, when the posture change of the vehicle body is caused from the forward tilting posture to the backward tilting posture by the pitch rate dθp of the vehicle body, the rear driving force Fdr is increased while the front driving force Fdf is reduced by the amount corresponding to the amount of increase of the rear driving force Fdr, so that movement of the vehicle body in the pitch direction is suppressed by the anti-squat effect of the rear suspension that suppresses the vehicle body from tilting backward owing to the increase of the rear driving force Fdr. In this instance, the total driving force Fd of the vehicle 10 is less likely to be changed.

In the present embodiment, when the posture change of the vehicle body is caused from the backward tilting posture to the forward tilting posture by the pitch rate dθp of the vehicle body, the rear driving force Fdr is reduced while the front driving force Fdf is increased by the amount corresponding to the amount of reduction of the rear driving force Fdr, so that movement of the vehicle body in the pitch direction is suppressed by the anti-dive effect of the rear suspension that suppresses the vehicle body from tilting forward, namely, by the anti-lift effect of the rear suspension that suppresses the rear wheels 14 from being lifted, owing to the reduction of the rear driving force Fdr, i.e., generation of the braking force of the rear wheels 14. In this instance, the total driving force Fd of the vehicle 10 is less likely to be changed.

In the present embodiment, the amount of the increase or reduction of the rear driving force Fdr is increased as the absolute value of the pitch rate dθp of the vehicle body is increased. Thus, it is possible to appropriately suppress the movement of the vehicle body in the pitch direction, owing to the effect on the rear suspension caused by the change of the rear driving force Fdr.

In present embodiment, the front drive apparatus 20 includes the front differential gear device 28 while the rear drive apparatus 30 includes the rear differential gear device 38. When the rear driving force Fdr is momentarily increased, for example, the bias effect of the rear differential gear device 38 is increased whereby the roll motion of the vehicle body is reduced. When the front driving force Fdf is momentarily increased, the bias effect of the front differential gear device 28 is increased whereby the roll motion of the vehicle body is reduced. The bias effect of the differential gear mechanism is that a differential effect of the differential gear mechanism is limited until an input torque to the differential gear mechanism exceeds a differential limiting torque that is generated when a side gear is pressed against a differential casing by the driving force. With the differential effect of the differential gear mechanism being limited, the right and left wheels are suppressed from being moved in opposite directions in relation to expansion and contraction of a wheelbase of the vehicle. Consequently, it is possible to suppress the right and left suspensions from expanding and contracting in opposite directions and to reduce the roll motion of the vehicle body.

There will be described another embodiment of this invention. The same reference signs as used in the above-described first embodiment will be used in the following embodiment, to identify the functionally corresponding elements, and descriptions thereof are not provided.

### SECOND EMBODIMENT

In the above-described first embodiment, the vehicle 10, which includes the front drive apparatus 20 configured to drive the front wheels 12 and the rear drive apparatus 30 configured to drive the rear wheels 14, was exemplified as the AWD vehicle that does not include the propeller shaft. In this second embodiment, an in-wheel motor type vehicle 100, which includes electric motors configured to drive respective wheels individually, is exemplified as the AWD vehicle that does not include the propeller shaft.

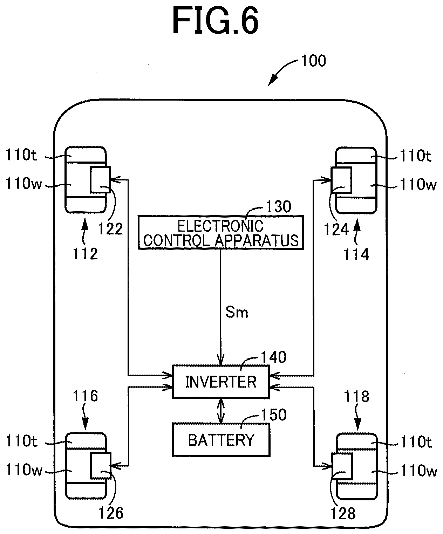

FIG. 6 is a view schematically showing a construction of the vehicle 100 to which the present invention is applied. As shown in FIG. 6, the vehicle 100 includes four wheels 110, four electric motors 120 provided for the respective wheels 110, and an electronic control apparatus 130. The four wheels 110 consist of a left front wheel 112, a right front wheel 114, a left rear wheel 116 and a right rear wheel 118. The left front wheel 112 and the right front wheel 114 are wheels corresponding to the right and left front wheels 12 in the above-described first embodiment. The left rear wheel 116 and the right rear wheel 118 are wheels corresponding to the right and left rear wheels 14 in the above-described first embodiment. The four electric motors 120 consist of a left-front electric motor 122, a right-front electric motor 124, a left-rear electric motor 126 and a right-rear electric motor 128.

Each of the electric motors 120 is a force source configured to generate the force providing the driving torque. Each of the electric motors 120 is a known rotary electric machine serving as a so-called motor generator. The electric motors 120 are connected to a battery 150 provided in the vehicle 100, through an inverter 140 provided in the vehicle 100. With the inverter 140 being controlled by the electronic control apparatus 130, an MG torque Tm as an output torque of each of the electric motors 120 is controlled.

Each of the wheels 110 include a wheel body 110w and a tire 110t that is mounted on the wheel body 110w. Each of the electric motors 120 is connected to the wheel body 110w of a corresponding one of the wheels 110 through a gear mechanism (not shown).

The left-front electric motor 122 is connected to the wheel body 110w of the left front wheel 112 in a force transmittable manner, and includes a part disposed in a space on an inner peripheral side of the wheel body 110w of the left front wheel 112. The right-front electric motor 124 is connected to the wheel body 110w of the right front wheel 114 in a force transmittable manner, and includes a part disposed in a space on an inner peripheral side of the wheel body 110w of the right-front electric motor 124. Each of the left-front electric motor 122 and the right-front electric motor 124 corresponds to "front-wheel electric motor" recited in the appended claims. Each of the left-front electric motor 122 and the right-front electric motor 124 cooperates with a gear mechanism (not shown) to constitute "front-wheel drive apparatus" which is configured to drive a corresponding one of the left front wheel 112 and the right front wheel 114 and which is recited in the appended claims. The wheel body 110w included in each of the left front wheel 112 and the right front wheel 114 corresponds to "front wheel body" recited in the appended claims.

The left-rear electric motor 126 is connected to the wheel body 110w of the left rear wheel 116 in a force transmittable manner, and includes a part disposed in a space on an inner peripheral side of the wheel body 110w of the left rear wheel 116. The right-rear electric motor 128 is connected to the wheel body 110w of the right rear wheel 118 in a force transmittable manner, and includes a part disposed in a space on an inner peripheral side of the wheel body 110w of the right-rear electric motor 128. Each of the left-rear electric motor 126 and the right-rear electric motor 128 corresponds to "rear-wheel electric motor" recited in the appended claims. Each of the left-rear electric motor 126 and the right-rear electric motor 128 cooperates with a gear mechanism (not shown) to constitute "rear-wheel drive apparatus" which is configured to drive a corresponding one of the left rear wheel 116 and the right rear wheel 118 and which is recited in the appended claims. The wheel body 110w included in each of the left rear wheel 116 and the right rear wheel 118 corresponds to "rear wheel body" recited in the appended claims.

The electronic control apparatus 130 has substantially the same functions as the electronic control apparatus 50 of the above-described first embodiment, and correspond to "control apparatus" recited in the appended claims. For example, like the electronic control apparatus 50, the electronic control apparatus 130 includes a drive controller (not shown), a pitch rate calculator (not shown) and a pitching determiner (not shown). Like the electronic control apparatus 50, the electronic control apparatus 130 is configured to receive various signals based on detection values detected by various sensors provided in the vehicle 100. Like the electronic control apparatus 50, the electronic control apparatus 130 outputs various command signals to various devices provided in the vehicle 100, wherein the command signals include an MG control command signal Sm which is supplied to the inverter 140 and which represents a torque command value for controlling an MG torque Tm of each of the four electric motors 120.

The vehicle 100 is an AWD vehicle capable of adjusting distribution of the driving torque among the wheels 110. The vehicle 10 is capable of running not only in the AWD state but also in the FWD state and RWD state.

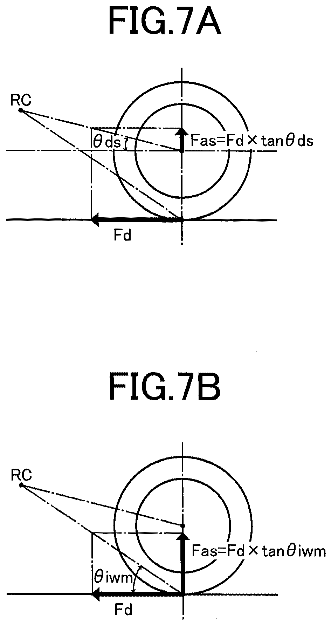

FIGS. 7A and 7B are views for comparing the anti-squat effect in the above-described first embodiment and that in the present second embodiment, wherein FIG. 7A is the view showing the anti-squat effect in the first embodiment, and FIG. 7B is the view showing the anti-squat effect in the present second embodiment.

As shown in FIG. 7A, when the force is transmitted to the wheel through the differential gear device, the differential gear device receives a reaction force of the driving force Fd, so that an anti-squat angle θds is formed between the instantaneous rotational center RC and a rotational center of the wheel. As shown in FIG. 7B, when the force is transmitted directly to the wheel, as in the in-wheel motor type vehicle, the suspension receives the reaction force of the driving force Fd, so that an anti-squat angle θiwm is formed between the instantaneous rotational center RC and a wheel contact point. The anti-squat angle θiwm is larger than the anti-squat angle θds. Thus, in the in-wheel motor type vehicle, the anti-squat force Fas is relatively large, thereby increasing the anti-squat effect. The same applies to the anti-lift force Fall. By adopting the in-wheel motor system, the control effect of the internal-torque simulation control (CNsim) is increased.

As described above, in the present second embodiment, substantially the same effects as those of the first embodiment can be obtained, except for the effect of reducing the roll motion.

In the present second embodiment in which the in-wheel motor system is employed, the suspension characteristics have a greater ability to control the increases and reduction of the driving force, so that the movement of the vehicle body in the pitch direction is further suppressed, as compared to an arrangement in which the force is transmitted from the force source to the drive wheels through the differential gear device.

While the preferred embodiments of the invention have been described in detail by reference to the drawings, it is to be understood that the invention may be otherwise embodied.

For example, in the above-described first and second embodiments, the pitch rate calculator 54 may calculate the pitch rate dθp, by using a value detected by at least one of an angle sensor, a gyro sensor and the G sensor 82.

In the above-described first and second embodiments, where the anti-squat coefficient of the front suspension is higher than that of the rear suspension, the front driving force Fdf may be increased at the pitch rate dθp, which causes the posture change of the vehicle body from the forward tilting posture to the backward tilting posture. In this case, the front driving force Fdf may be reduced at the pitch rate dθp, which causes the posture change of the vehicle body from the backward tilting posture to the forward tilting posture.

In the above-described first embodiment, thee front-wheel driving force source may be, for example, an internal combustion engine, in place of or in addition to the front motor 22. Further, the rear-wheel driving force source may be, for example, an internal combustion engine, in place of or in addition to the rear motor 32.

It is to be understood that the embodiments described above are given for illustrative purpose only, and that the present invention may be embodied with various modifications and improvements which may occur to those skilled in the art.

### NOMENCLATURE OF ELEMENTS

10: vehicle
12: front wheel
12L: left front wheel
12R: right front wheel
14: rear wheel
14L: left rear wheel
14R: right rear wheel
20: front drive apparatus (front-wheel drive apparatus)
22: front motor (front-wheel driving force source)
28: front differential gear device (front-wheel differential gear mechanism)
30: rear drive apparatus (rear-wheel drive apparatus)
32: rear motor (rear-wheel driving force source)
38: rear differential gear device (rear-wheel differential gear mechanism)
50: electronic control apparatus (control apparatus)
52: drive controller
54: pitch rate calculator (pitch-angular-speed calculator)
100: vehicle
110w: wheel body (front wheel body, rear wheel body)
112: left front wheel (front wheel)
114: right front wheel (front wheel)
116: left rear wheel (rear wheel)
118: right rear wheel (rear wheel)
122: left-front electric motor (front-wheel electric motor, front-wheel drive apparatus)
124: right-front electric motor (front-wheel electric motor, front-wheel drive apparatus)
126: left-rear electric motor (rear-wheel electric motor, rear-wheel drive apparatus)
128: right-rear electric motor (rear-wheel electric motor, rear-wheel drive apparatus)
130: electronic control apparatus (control apparatus)

## Claims

1. A control apparatus (50;130) for a vehicle (10;100) that includes (i) right and left front wheels (12;114,112), (ii) a front-wheel drive apparatus (20;124,122) which is configured to drive the front wheels (12; 114,112), (iii) right and left rear wheels (14;118,116) and (iv) a rear-wheel drive apparatus (30;128,126) which is provided independently of the front-wheel drive apparatus (20;124,122) and which is configured to drive the rear wheels (14;118,116),
the control apparatus (50;130) comprising:
a pitch-angular-speed calculator (54) configured to calculate an angular speed of a vehicle body that is a body of the vehicle (10;100), in a pitch direction of the vehicle body; and
a drive controller (52) configured to change a driving force of the front wheels (12;114,112) and a driving force of the rear wheels (14;118,116), based on the angular speed of the vehicle body in the pitch direction, for suppressing a posture change of the vehicle body in the pitch direction while keeping a total driving force of the vehicle (10; 100) unchanged.

2. The control apparatus (50;130) according to claim 1,
wherein, when the posture change of the vehicle body is caused from a forward tilting posture to a backward tilting posture by the angular speed of the vehicle body in the pitch direction, the drive controller (52) is configured to increase the driving force of the rear wheels (14; 118, 116) and to reduce the driving force of the front wheels (12; 114, 112) by an amount corresponding to an amount of increase of the driving force of the rear wheels (14; 118, 116), and
wherein, when the posture change of the vehicle body is caused from the backward tilting posture to the forward tilting posture by the angular speed of the vehicle body in the pitch direction, the drive controller (52) is configured to reduce the driving force of the rear wheels (14; 118, 116) and to increase the driving force of the front wheels (12; 114, 112) by an amount corresponding to an amount of reduction of the driving force of the rear wheels (14; 118, 116).

3. The control apparatus (50;130) according to claim 2,
wherein the drive controller (52) is configured to increase the amount of the increase or reduction of the driving force of the rear wheels (14; 118, 116) as an absolute value of the angular speed of the vehicle body in the pitch direction is increased.

4. The control apparatus (50) according to any one of claims 1-3,
wherein (ii) the front-wheel drive apparatus (20) includes (ii-1) a front-wheel driving force source (22) and (ii-2) a front-wheel differential gear mechanism (28) configured to distribute the drive force supplied from the front-wheel driving force source (22) between the right and left front wheels (12) and to allow a difference between rotations of the right and left front wheels (12), and
wherein (iv) the rear-wheel drive apparatus (30) includes (iv-1) a rear-wheel driving force source (32) and (iv-2) a rear-wheel differential gear mechanism (38) configured to distribute the drive force supplied from the rear-wheel driving force source (32) between the right and left rear wheels (14) and to allow a difference between rotations of the right and left rear wheels (14).

5. The control apparatus (130) according to any one of claims 1-3,
wherein the front-wheel drive apparatus (124,122) includes a front-wheel electric motor (124,122) which is connected to a front wheel body (110w) of each of the right and left front wheels (114,112) in a force transmittable manner and which includes a part disposed in a space on an inner peripheral side of the front wheel body (110w), and
wherein the rear-wheel drive apparatus (128,126) includes a rear-wheel electric motor (128,126) which is connected to a rear wheel body (110w) of each of the right and left rear wheels (118,116) in a force transmittable manner and which includes a part disposed in a space on an inner peripheral side of the rear wheel body (110w).
